# EUROPÄISCHE PATENTANMELDUNG

(11) **EP 1 467 245 A1**
(43) Veröffentlichungstag der Anmeldung: **13.10.2004**
(21) Anmeldenummer: 04008882.5
(22) Anmeldetag: 10.04.2004
(51) Int. Cl.: G03B 17/56, F16M 11/00, H04N 5/222

(54) **Kamera/Monitor-System**

(30) Priorität: 12.04.2003 DE 10316964
(71) Anmelder: TVN-Television Programm- und Nachrichten GmbH & Co. KG, 30159 Hannover (DE)
(72) Erfinder: Peiss, Wolfgang, 30171 Hannover (DE)
(74) Vertreter: Seewald, Jürgen, Dipl.-Ing.

(57) **Zusammenfassung**

Die Erfindung betrifft ein Kamera/Monitor-System mit einem Stativ, das eine Mittelsäule umfasst, die einen horizontal und vertikal schwenkbar und höhenverstellbar ausgebildeten Aufnahmekopf für eine Kamera trägt, und mit mindestens wenigstens einem Monitor (30) zur Wiedergabe von mit der Kamera aufgenommenen Bildern und Ton. Um gleichzeitig in Richtung Monitor und Richtung Kamera sehen zu können, weist die Mittelsäule (7) eine Halterung (24,26,28) für wenigstens einen Monitor (30) auf, die um die Mittelsäule (7) drehbar ist und drehfest mit einer Vorrichtung (14) zum horizontalen Verschwenken des Aufnahmekopfes (12) verbunden ist.

## Beschreibung

Die Erfindung betrifft ein Kamera/Monitor-System gemäß Oberbegriff des Anspruchs 1.

Es ist bekannt, beispielsweise für Studioaufnahmen mit einem Moderator eine Kamera auf einem Aufnahmekopf eines Studiostativs zu montieren. Der Aufnahmekopf und damit auch die montierte Kamera sind horizontal und vertikal verschwenkbar und höhenverstellbar. Der Moderator kann die Sendung auf einem oder mehreren Monitoren verfolgen, welche fest im Raum installiert sind, so dass der Moderator in der Regel nicht gleichzeitig in Richtung Monitor und Kamera sehen kann. Er muss den Kopf, zumindest die Augen, zwischen Monitor und Kamera hin- und herbewegen.

Die Aufgabe der vorliegenden Erfindung besteht darin, ein Kamera/Monitor-System der eingangs genannten Art so auszubilden, dass der Moderator gleichzeitig in Richtung Monitor und in Richtung Kamera sehen kann.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung schlägt vor, einen oder mehrere Monitore mit einem Kamerastativ zu verbinden, und zwar derart, dass der Monitor synchron mit der Kamerabewegung mitbewegt wird. Hierdurch wird erreicht, dass ein Moderator praktisch gleichzeitig in die Kamera und auf den Monitor schauen kann, ohne den Kopf bzw. die Augen immer zwischen Monitor und Kamera hin- und herbewegen zu müssen.

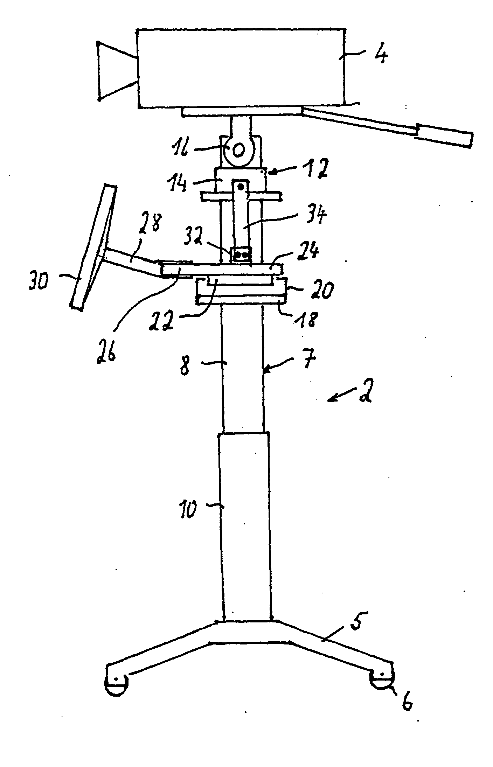

Die Erfindung soll nachfolgend anhand der beigefügten Zeichnung, in der schematisch ein Ausführungsbeispiel dargestellt ist, näher erläutert werden.

Die Zeichnung zeigt schematisch ein Bodenstativ 2 zur Aufnahme einer Kamera 4. Das Stativ weist einen Dreifuß 5 auf, der mit Rollen 6 ausgestattet sein kann. Das Stativ umfasst eine in der Regel teleskopartig ausgebildete Mittelsäule 7 mit beispielsweise zwei Säulenteilen 8, 10. Das Stativ weist einen Stativkopf bzw. Aufnahmekopf 12 für die Kamera 4 auf. Der Aufnahmekopf ist, wie an sich bekannt, mittels Schwenkvorrichtungen 14 und 16 horizontal und vertikal verschwenkbar.

Das aufnahmekopfseitige Säulenteil 8 ist unterhalb des Aufnahmekopfes 12 auf seinem Umfang mit einem ringförmigen Befestigungsflansch 18 versehen, auf dem ein Lagergehäuse 20 für ein vorzugsweise kugelgelagertes ringförmiges Drehelement beispielsweise einen ringförmigen Drehteller 22 befestigt ist. Mit dem ringförmigen Drehteller 22 ist eine Grundplatte 24 fest verbunden, die vom Säulenteil 8 mit Spiel durchsetzt ist und einen in Kamerarichtung wegragenden plattenförmigen Arm 26 aufweist, an dem eine plattenförmige Halterung 28 angeordnet ist, die vorzugsweise relativ zum Arm 26 verschiebbar und ggf. zusätzlich schwenkbar ausgebildet ist. Die plattenförmige Halterung dient zur Aufnahme eines oder mehrerer Monitore 30.

Die über das Drehelement 22 drehbar angeordnete Grundplatte 24 weist oberseitig wenigstens eine Befestigungslasche 32 auf, die mit Hilfe eines Verbindungselementes 34 mit der Vorrichtung 14 zum horizontalen Verschwenken des Aufnahmekopfes 12 starr verbunden ist. Hierdurch ist gewährleistet, dass die Grundplatte 24 und damit der Monitor 30 synchron mit dem Aufnahmekopf 12 und damit mit der Kamera 4 verschwenkbar ist, so dass die aufgenommene Person, beispielsweise der Moderator, praktisch gleichzeitig in die Kamera und auf den Monitor sehen kann.

## Patentansprüche

1. Kamera/Monitor-System mit einem Stativ, das eine Mittelsäule umfasst, die einen horizontal und vertikal schwenkbar und höhenverstellbar ausgebildeten Aufnahmekopf für eine Kamera trägt, und mindestens einen Monitor zur Wiedergabe von mit der Kamera aufgenommenen Bildern und Ton aufweist, **dadurch gekennzeichnet, dass** die Mittelsäule (7) eine Halterung (24, 26, 28) für wenigstens einen Monitor (30) aufweist, die um die Mittelsäule (7) drehbar ist und drehfest mit einer Vorrichtung (14) zum horizontalen Verschwenken des Aufnahmekopfes (12) verbunden ist.

2. Kamera/Monitor-System nach Anspruch 1, **dadurch gekennzeichnet, dass** die Halterung eine Grundplatte (24) aufweist, die mit einem ringförmigen, die Mittelsäule (7) umgebenden Drehteller (22) verbunden ist, der in einem Lagergehäuse (20) gelagert ist, das an der Mittelsäule (7) oder auf einem ringförmigen Befestigungsflansch (18) der Mittelsäule (7) angebracht ist.

3. Kamera/Monitor-System nach Anspruch 1 oder 2, **dadurch gekennzeichnet, dass** die Grundplatte (24) einen seitlich wegragenden plattenförmigen Arm (26) aufweist, an dem der wenigstens eine Monitor oder eine plattenförmige Halterung (28) für den wenigstens einen Monitor anbringbar ist.

4. Kamera/Monitor-System nach Anspruch 2 oder 3, **dadurch gekennzeichnet, dass** die Grundplatte (24) wenigstens eine Befestigungslasche (32) aufweist, die mit Hilfe eines Verbindungselementes (34) starr mit der Vorrichtung (14) zum horizontalen Verschwenken des Aufnahmekopfes (12) verbunden ist.

5. Kamera/Monitor-System nach Anspruch 3, **dadurch gekennzeichnet, dass** die plattenförmige Halterung (28) verschiebbar mit der Grundplatte (24) verbunden ist.
